# FASCICULE DE BREVET EUROPEEN

(11) **EP 1 611 322 B1**
(45) Date de publication et mention de la délivrance du brevet: **09.05.2007**
(21) Numéro de dépôt: 04742387.6
(22) Date de dépôt: 29.03.2004
(51) Int. Cl.: F01N 3/022, F01N 3/28, B01D 53/94

(54) **STRUCTURE DE FILTRATION POUR LES GAZ D ECHAPPEMENT D UN MOTEUR A COMBUSTION INTERNE**
FILTRATIONSKONSTRUKTION FÜR DAS ABGAS AUS EINER BRENNKRAFTMASCHINE
FILTRATION STRUCTURE FOR THE EXHAUST GAS FROM AN INTERNAL COMBUSTION ENGINE

(30) Priorité: 01.04.2003 FR 0304052; 04.02.2004 FR 0401080
(43) Date de publication de la demande: 04.01.2006
(73) Titulaire: Saint-Gobain Centre de Recherches et d'Etudes Européen, 92400 Courbevoie (FR)
(72) Inventeur: BARDON, Sébastien, F-69006 Lyon (FR); GLEIZE, Vincent, F-84450 Saint-Saturnin les Avignon (FR); ROMEYER, Julien, F-74000 Annecy (FR)
(74) Mandataire: Blot, Philippe Robert Emile
(86) Numéro de dépôt international: PCT/FR2004/000786
(87) Numéro de publication internationale: WO 2004/090294

(56) Documents cités:
- EP-A- 0 816 065
- EP-A- 1 142 619

## Description

La présente invention concerne une structure de filtration, notamment un filtre à particules pour les gaz d'échappement d'un moteur à combustion interne, du type comprenant :
- au moins des premier et second organes de filtration munis respectivement d'une première et d'une seconde faces disposées en regard l'une de l'autre ; et
- un joint de liaison desdites faces, s'étendant entre lesdites faces.

De telles structures sont utilisées notamment dans les dispositifs de dépollution des gaz d'échappement de moteurs à combustion interne. Ces dispositifs comportent un pot d'échappement comprenant en série un organe de purification catalytique et un filtre à particules. L'organe de purification catalytique est adapté pour le traitement des émissions polluantes en phase gazeuse, alors que le filtre à particules est adapté pour retenir les particules de suie émises par le moteur.

Dans des structures connues du type précité (voir par exemple EP-A-1 142 619), les organes de filtration comprennent un ensemble de conduits adjacents d'axes parallèles, séparés par des parois poreuses de filtration. Ces conduits s'étendent entre une face d'admission des gaz d'échappement à filtrer et une face d'évacuation des gaz d'échappement filtrés. Ces conduits sont par ailleurs obturés à l'une ou l'autre de leurs extrémités pour délimiter des chambres d'entrée s'ouvrant sur la face d'admission et des chambres de sortie s'ouvrant suivant la face d'évacuation.

Ces structures fonctionnent suivant une succession de phases de filtration et de régénération. Lors des phases de filtration, les particules de suie émises par le moteur se déposent sur les parois des chambres d'entrée. La perte de charge à travers le filtre augmente progressivement. Au delà d'une valeur prédéterminée de cette perte de charge, une phase de régénération est effectuée.

Lors de la phase de régénération, les particules de suie, composées essentiellement de carbone, sont brûlées sur les parois des chambres d'entrée afin de restituer à la structure ses propriétés originelles.

Cependant, les particules de suie ne s'accumulent pas de manière homogène dans les organes de filtration. Ainsi, les suies s'accumulent préférentiellement au centre de la structure de filtration et vers la face d'évacuation des gaz d'échappement. Lors des phases de régénération, la combustion des suies provoque une élévation de température dans les zones d'accumulation préférentielles, supérieure à l'élévation de température observée dans les autres zones de la structure.

Les gradients de température au sein de la structure de filtration génèrent des dilatations locales d'amplitudes différentes, et par suite, des contraintes longitudinales et transversales dans et/ou entre les différents organes de filtration.

Ces fortes contraintes thermomécaniques sont à l'origine de fissures dans les organes de filtration et/ou dans les joints de liaison entre ces organes de filtration.

Pour limiter le risque d'apparition de ces fissures, la demande de brevet EP-A-1 142 619 propose d'utiliser des joints de liaison dont l'épaisseur est choisie dans la plage de 0,3 à 3 mm et dont la conductivité thermique est comprise entre 0,1 et 10 W/m.K.

Les structures actuelles ne donnent pas entière satisfaction. En effet, au-delà d'un certain nombre de phases de régénération, des fissures peuvent apparaître dans le joint de liaison. Ces fissures s'accompagnent d'une perte totale de cohésion de la structure de filtration. Cette perte de cohésion conduit à des fuites et la structure doit être remplacée.

L'invention a pour but principal de remédier à cet inconvénient, c'est-à-dire de fournir une structure de filtration poreuse pour filtre à particules permettant une utilisation prolongée du filtre.

A cet effet, l'invention a pour objet une structure de filtration du type précité, caractérisée en ce que la première face comprend au moins une première zone d'adhérence forte avec ledit joint et au moins une zone d'adhérence faible ou nulle avec ce joint, lesdites zones comportant respectivement une première région d'adhérence forte avec ledit joint et une région d'adhérence faible ou nulle avec ce joint, lesdites régions étant disposées respectivement en regard d'une première région d'adhérence faible ou nulle de la seconde face avec ledit joint, et d'une région d'adhérence forte de la seconde face avec ledit joint.

La structure de filtration selon l'invention peut comporter une ou plusieurs des caractéristiques suivantes, prises isolément ou suivant toutes combinaisons techniquement possibles :
- la première face comprend en outre une seconde zone d'adhérence forte avec ledit joint comportant une seconde région d'adhérence forte avec ledit joint disposée en regard d'une seconde région d'adhérence faible ou nulle de la seconde face avec ledit joint ;
- dans au moins une section de la structure de filtration, la région d'adhérence faible ou nulle avec ledit joint de la première face est disposée entre les première et seconde régions d'adhérence forte avec ledit joint de cette première face ;
- ladite section est une section longitudinale ;
- ladite section est une section transversale;
- un organe de filtration est une brique prismatique dont chacune des faces latérales est en regard d'une face latérale d'un organe de filtration associé, un joint de liaison desdites faces s'étendant entre lesdites faces ; et chacune des faces latérales de la brique comprend au moins une zone d'adhérence forte de cette face de la brique avec ledit joint et au moins une zone d'adhérence faible ou nulle de cette face avec ledit joint, lesdites zones comportant respectivement une région d'adhérence forte de cette face de la brique avec ledit joint et une région d'adhérence faible ou nulle de cette face avec ledit joint, les dites régions étant disposées respectivement en regard d'une région d'adhérence faible ou nulle avec ledit joint de la face en regard de l'organe de filtration associé et d'une région d'adhérence forte avec ledit joint de la face en regard de l'organe de filtration associé ;
- la région d'adhérence forte avec ledit joint de la première face de la brique est disposée à l'opposé d'une région d'adhérence faible ou nulle avec ledit joint d'une seconde face de la même brique ;
- chacune des zones d'adhérence faible ou nulle avec ledit joint est couverte d'un revêtement antiadhésif, au moins avant la mise en service de la structure ;
- les premier et second organes de filtration comprennent chacun une face d'admission et une face d'évacuation reliées respectivement par lesdites première et seconde faces, au moins une région aval d'adhérence faible ou nulle avec ledit joint de la première face s'étendant jusqu'à l'arête commune entre la face d'évacuation et ladite première face ;
- ladite région aval présente une longueur, prise parallèlement à une direction longitudinale du premier organe de filtration, inférieure au cinquième de la longueur dudit premier organe de filtration, prise suivant ladite direction longitudinale ;
- ladite région aval présente une longueur, prise parallèlement à une direction longitudinale du premier organe de filtration, inférieure à la moitié d'au moins une autre région de la même face ;
- le premier organe de filtration comprend en outre une face latérale adjacente à la première face, la face latérale présentant une région latérale d'adhérence forte avec ledit joint s'étendant jusqu'à l'arête de sortie commune auxdites face latérale et face d'évacuation ; et
- la région aval d'adhérence faible ou nulle avec le joint présente, du côté du joint, des irrégularités de surface, notamment des bossages ou/et des rainures.

Le terme « brique prismatique » désigne un ensemble comportant une face d'entrée, une face de sortie et au moins trois faces latérales qui relient la face d'entrée à la face de sortie

Des exemples de mise en oeuvre de l'invention vont maintenant être décrits en regard des dessins annexés sur lesquels :
- la Figure 1 est une vue en perspective d'une première structure de filtration selon l'invention ;
- la Figure 2 est une vue partielle en coupe suivant la ligne II-II de la structure de filtration de la Figure 1 ;
- la Figure 3 est une vue partielle en perspective éclatée de la structure de filtration de la Figure 1 ;
- la Figure 4 est une vue analogue à la Figure 2, après plusieurs cycles de régénération de la structure de filtration ;
- la Figure 5 est une vue analogue à la Figure 3 d'une variante de la première structure de filtration selon l'invention;
- la Figure 6 est une vue analogue à la Figure 2 d'une seconde structure de filtration selon l'invention ;
- la Figure 7 est une vue analogue à la Figure 4, à plus grande échelle, d'une troisième structure de filtration selon l'invention;
- la Figure 8 est une vue analogue à la Figure 3 d'une quatrième structure de filtration selon l'invention ; et
- la Figure 9 est une vue analogue à la Figure 2, à plus grande échelle, d'une cinquième structure de filtration selon l'invention.

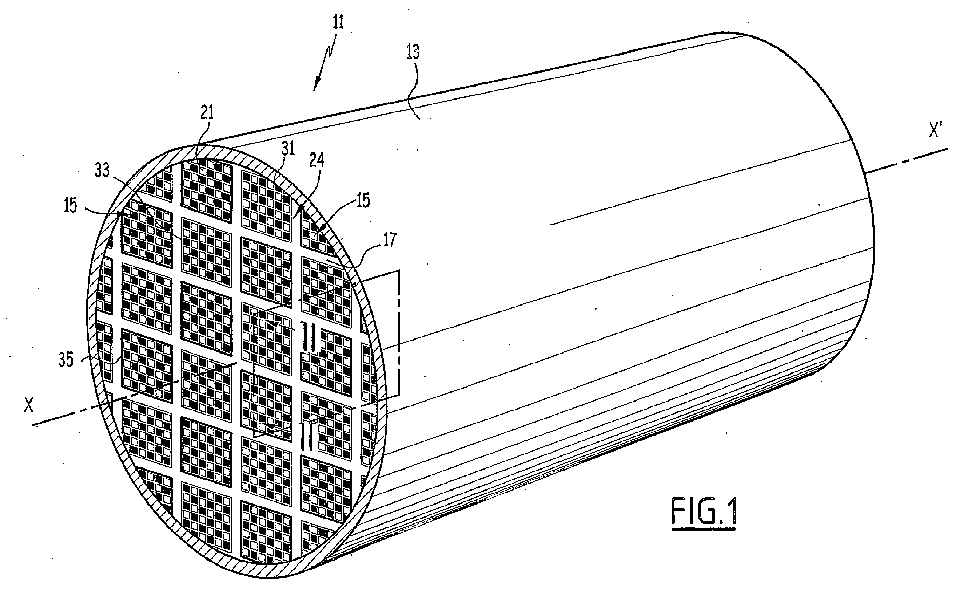

Le filtre à particules 11 représenté sur la Figure 1 est disposé dans une ligne 13 d'échappement des gaz d'un moteur diesel de véhicule automobile, représentée partiellement.

Cette ligne d'échappement 13 se prolonge au-delà des extrémités du filtre à particules 11 et délimite un passage de circulation des gaz d'échappement.

Le filtre à particules 11 s'étend suivant une direction X-X' longitudinale de circulation des gaz d'échappement. Il comprend une pluralité de blocs 15 de filtration reliés entre eux par des joints de liaison 17.

Chaque bloc de filtration 15 est de forme sensiblement parallélépipédique rectangle allongé suivant la direction longitudinale X-X'.

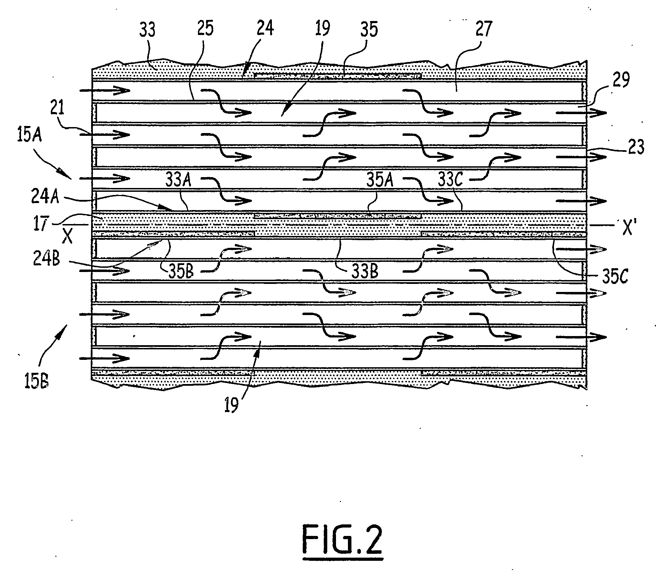

Comme illustré sur la Figure 2, chaque bloc de filtration 15A, 15B comporte une structure de filtration 19 poreuse, une face 21 d'admission des gaz d'échappement à filtrer, une face 23 d'évacuation des gaz d'échappement filtrés, et au moins quatre faces latérales 24.

La structure de filtration poreuse 19 est réalisée en un matériau de filtration constitué d'une structure monolithique, notamment en céramique (cordiérite ou carbure de silicium).

Cette structure 19 possède une porosité suffisante pour permettre le passage des gaz d'échappement. Cependant, comme connu en soi, le diamètre des pores est choisi suffisamment petit pour assurer une retenue des particules de suie.

La structure poreuse 19 comporte un ensemble de conduits adjacents d'axe parallèle à la direction longitudinale X-X'. Ces conduits sont séparés par des parois 25 poreuses de filtration. Dans l'exemple illustré sur la Figure 1, ces parois 25 sont d'épaisseur constante et s'étendent longitudinalement dans la structure de filtration 19, de la face d'admission 21 à la face d'évacuation 23.

Les conduits sont répartis en un premier groupe de conduits d'entrée 27 et un second groupe de conduits de sortie 29. Les conduits d'entrée 27 et les conduits de sortie 29 sont disposés tête-bêche.

Les conduits d'entrée 27 sont obturés au niveau de la face d'évacuation 23 du bloc de filtration 15A, 15B et sont ouverts à leur autre extrémité.

Au contraire, les conduits de sortie 29 sont obturés au niveau de la face d'admission 21 du bloc de filtration 15A, 15B et débouchent suivant sa face d'évacuation 23.

Dans l'exemple illustré Figure 1, les conduits d'entrée 27 et de sortie 29 ont des sections constantes suivant toute leur longueur.

Comme représenté sur la Figure 1, les faces latérales 24 du bloc de filtration situées en regard d'un autre bloc de filtration sont planes. Les faces latérales 31 situées en regard de la ligne d'échappement 13 sont de forme adaptée pour assurer le contact avec la paroi intérieure cylindrique de cette ligne 13.

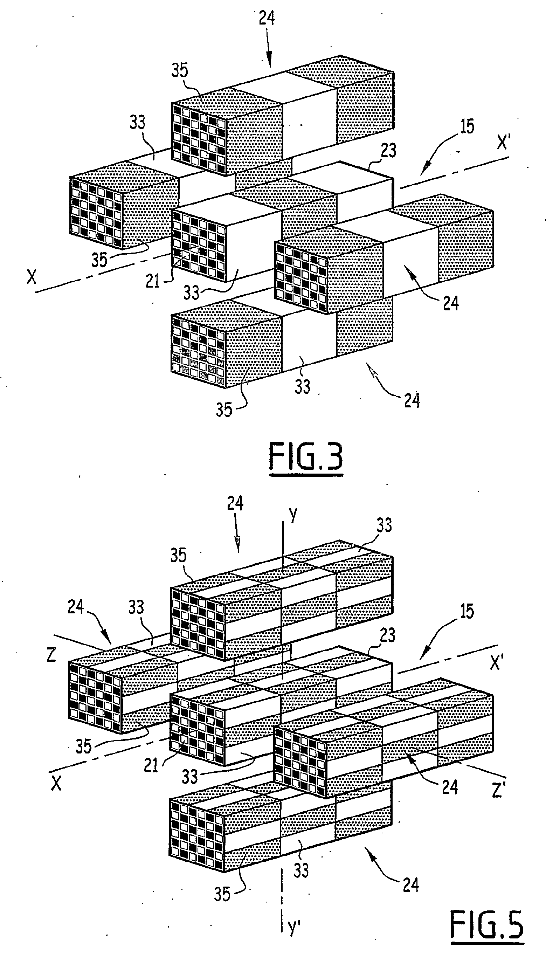

Comme illustré sur les Figures 2 et 3, chacune des faces planes 24 situées en regard d'un autre bloc de filtration comprend au moins une zone 33 fermement solidaire du joint 17, et au moins une zone 35, qui lors de la fabrication de la structure 19, est couverte d'un revêtement antiadhésif. Ce revêtement est par exemple à base de papier, de polytétrafluoroéthylène, ou de nitrure de bore.

Ainsi, la zone 33 constitue une région d'adhérence forte avec le joint 17, tandis que la zone 35 constitue une région d'adhérence faible ou nulle avec le joint 17.

L'adhérence entre le joint de liaison 17 et les faces planes 24 des blocs de filtration 15 dans les zones 33 d'adhérence forte est au moins 10 fois supérieure à celle des zones 35 d'adhérence faible ou nulle, cette adhérence étant comprise entre 0 et 50 MPa.

Par exemple, la disposition des zones 33 et des zones 35 sur les faces planes 24 des blocs de filtration 15 est illustrée sur les Figures 2 et 3.

Comme représenté sur la Figure 2, la première face plane 24A du premier bloc de filtration 15A comprend successivement, suivant la direction longitudinale X-X', une première zone 33A d'adhérence forte avec le joint 17, une zone 35A d'adhérence faible ou nulle avec le joint 17 et une seconde zone 33C d'adhérence forte avec le joint 17.

Le second bloc de filtration 15B comprend une seconde face 24B, en regard de la première face 24A.

Cette seconde face 24B comporte successivement suivant la direction X-X', une première zone 35B d'adhérence faible ou nulle en regard de la première zone 33A d'adhérence forte de la première face 24A, une zone 33B d'adhérence forte, en regard de la zone 35B d'adhérence faible ou nulle de la première face 24A, et une seconde zone 35C d'adhérence faible ou nulle en regard de la seconde zone 33C d'adhérence forte de la première face 24A.

Dans l'exemple illustré sur la Figure 3, cette disposition relative des zones 33 d'adhérence forte et des zones 35 d'adhérence faible ou nulle est commune à toutes les faces planes 24 d'un même bloc de filtration 15.

Le joint de liaison 17 est disposé entre les faces planes 24 des blocs de filtration 15. Ce joint de liaison 17 est réalisé à base de ciment céramique, généralement constitué de silice et/ou de carbure de silicium et/ou de nitrure d'aluminium. Après frittage, ce ciment a un module d'élasticité d'environ 5000 MPa. Ce ciment solidarise les blocs de filtration entre eux.

Pour le montage de la structure 19, un premier étage de filtration est constitué par assemblage deux à deux suivant des surfaces verticales de blocs de filtration 15 à l'aide du joint de liaison 17.

On réalise ensuite un deuxième étage de filtration suivant le même procédé.

Dans le cas où le joint de liaison est constitué d'un ciment très rigide, et quel que soit l'agencement des zones 33 et 35 sur les diverses faces des blocs 15, avant l'assemblage des premier et second étages de filtration entre eux suivant des surfaces horizontales, des protections (par exemple caches en carton) sont disposées entre les surfaces horizontales des briques pour couvrir les arêtes adjacentes à des zones d'adhérence faible ou nulle des surfaces verticales. Ainsi, la formation par le joint de liaison de ponts horizontaux d'adhérence forte entre les zones d'adhérence faible ou nulle des surfaces verticales est évitée.

Le fonctionnement de la première structure de filtration selon l'invention va maintenant être décrit.

Lors d'une phase de filtration (Figure 1), les gaz d'échappement chargés de particules sont guidés jusqu'aux faces d'entrée 21 des blocs de filtration 15 par la ligne d'échappement 13. Comme indiqué par des flèches sur la Figure 2, ils pénètrent ensuite dans les conduits d'entrée 27, et passent à travers les parois 25 de la structure poreuse 19. Lors de ce passage, les suies se déposent sur les parois 25 des conduits d'entrée 27. Ces suies se déposent préférentiellement au centre du filtre à particules 11 et vers la face d'évacuation 23 des blocs de filtration 15 (à droite sur le dessin).

Les gaz d'échappement filtrés s'échappent par les conduits d'évacuation 29 et sont guidés vers la sortie du pot d'échappement.

Lorsque le véhicule a parcouru 500 km environ, la perte de charge à travers le filtre 11 augmente de manière significative. Une phase de régénération est alors effectuée.

Dans cette phase, les suies sont oxydées par élévation de la température du filtre 11. Cette oxydation est exothermique. La répartition inhomogène des suies dans le filtre 11 provoque un gradient de température entre les zones de forte accumulation des suies et des zones de faible accumulation des suies.

Par ailleurs, les blocs de filtration et les joints se dilatent sous l'effet de la température. L'amplitude locale de cette dilatation dépend de la température.

Ces variations d'amplitude de dilatation, sous l'effet des gradients de température, génèrent de fortes contraintes thermomécaniques. La Demanderesse pense que le système suivant la présente invention peut, grâce à la présence de zones d'adhérence faible ou nulle, relâcher les contraintes sans création de fissures dans un organe de filtration ou dans le joint de liaison.

Par ailleurs, les zones d'adhérence faible ou nulle et celles d'adhérence forte sont agencées de telle sorte que, si les contraintes thermomécaniques sont trop fortes pour la structure, la fissuration se fait dans des zones privilégiées 41.

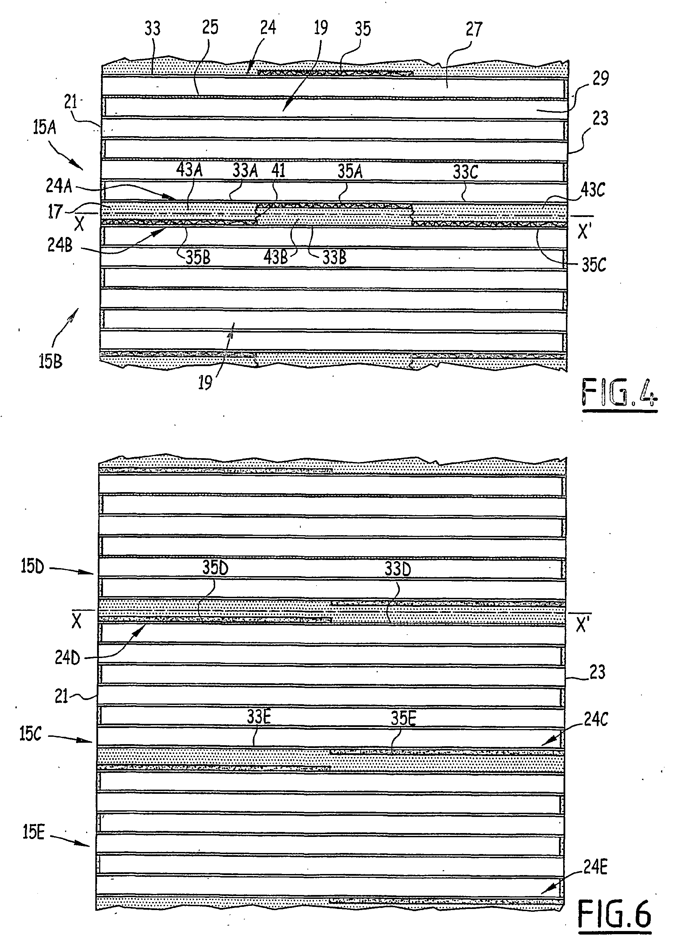

Ainsi, comme illustré sur la Figure 4, la propagation des fissures 41 dans les joints 17 est guidée le long des zones 35 d'adhérence faible ou nulle du joint 17 sur les faces planes 24 des blocs de filtration 15. Ainsi, les fissures 41 entre le premier bloc de filtration 15A et le second bloc de filtration 15B sont localisées suivant la première zone 35B d'adhérence faible ou nulle de la seconde face 24B, puis entre l'extrémité droite de cette zone 35B et l'extrémité gauche de la zone 35A d'adhérence faible ou nulle de la première face et suivant cette dernière zone 35A d'adhérence faible ou nulle.

Même si le joint 17 est totalement fissuré dans ces zones 35A et 35B, une première portion 43A de joint 17 reste solidaire du premier bloc de filtration 15A suivant la première zone 33A d'adhérence forte de la première face 24A. Une deuxième portion 43B de joint 17 de forme complémentaire à la première portion 43A reste solidaire du second bloc de filtration 15B suivant la zone d'adhérence forte 33B de la deuxième face 24B.

La coopération entre ces première et deuxième portions 43A et 43B de joint 17 empêche le mouvement longitudinal relatif du premier bloc de filtration 15A par rapport au second bloc de filtration 15B vers les faces d'évacuation 23 des blocs de filtration 15A et 15B.

Par ailleurs, la propagation des fissures 41 est guidée entre l'extrémité droite de la zone 35A d'adhérence faible ou nulle de la première face 24A jusqu'à l'extrémité gauche de la seconde zone 35C d'adhérence faible ou nulle de la seconde face 24B et suivant cette seconde zone 35C.

Même si le joint est totalement fissuré dans ces zones 35B et 35C, le premier bloc de filtration 15A reste solidaire d'une troisième portion 43C de joint 17 en regard de la seconde zone 33C d'adhérence forte de la première face 24A. Cette troisième portion 43C est de forme complémentaire à la deuxième portion 43B de joint 17.

Cette troisième portion 43C coopère avec la deuxième portion 43B pour empêcher le déplacement relatif du premier bloc 15A par rapport au second bloc 15B suivant la direction longitudinale X-X' vers les faces d'admission 21 des blocs de filtration 15A et 15B.

Dans ce filtre à particules, le relâchement des contraintes thermomécaniques est donc assuré, selon leur intensité, par la structure elle-même (en cas de présence de zones d'adhérence nulle), et par la formation de fissures 41 dont la propagation est maîtrisée.

Par ailleurs, la propagation de ces fissures 41 dans les joints 17 est guidée pour empêcher le déplacement relatif des blocs de filtration 15 les uns par rapport aux autres et préserver ainsi l'étanchéité du filtre à particules 11 par rapport aux suies.

Dans la variante illustrée sur la Figure 5, à la différence de la structure illustrée sur la Figure 3, des zones 33 d'adhérence forte avec le joint 17 et des zones 35 d'adhérence faible ou nulle avec le joint 17, sur chacune des faces planes 24 des blocs de filtration 15, sont disposées successivement en alternance suivant d'une part, des directions parallèles à la direction longitudinale X-X' et suivant d'autre part, des directions parallèles aux directions transversales Y-Y' et Z-Z' perpendiculaires à la direction longitudinale X-X'. Les zones 33 et les zones 35 forment ainsi une structure en damier sur chaque face 24 de chaque bloc 15.

Par ailleurs, les zones 33 d'adhérence forte avec le joint 17 et les zones 35 d'adhérence faible ou nulle avec le joint 17 d'une face 24 d'un bloc 15 sont situées respectivement en regard de zones 35 d'adhérence faible ou nulle avec le joint 17 et de zones 33 d'adhérence forte avec le joint 17 d'une face 24 d'un autre bloc 15.

Dans cette structure, le déplacement relatif des blocs d'une part, suivant la direction longitudinale X-X' et d'autre part, suivant les directions transversales Y-Y' et Z-Z' est ainsi évité.

Dans la variante illustrée sur la Figure 6, le bloc de filtration central 15C comprend successivement suivant la direction X-X', sur une première face 24D, une seule zone 33D d'adhérence forte avec le joint 17 et une seule zone 35D d'adhérence faible avec le joint 17. Il comprend par ailleurs, sur une seconde face 24E opposée à la première face 24D, une seconde zone 35E d'adhérence faible ou nulle à l'opposé de la première zone 33D d'adhérence forte avec le joint 17, et une seconde zone 33E d'adhérence forte avec le joint 17 à l'opposé de la première zone 35D d'adhérence faible ou nulle avec le joint 17. Les blocs de filtration 15D et 15E situés en regard des première et seconde faces 24D et 24E comprennent des zones d'adhérence forte et des zones d'adhérence faible en regard, respectivement, des zones d'adhérence faible 35D, 35E et des zones d'adhérence forte 33D, 33E des première et seconde faces 24D et 24E du bloc de filtration central 15C.

Dans cet exemple, si le joint 17 se fissure, le déplacement longitudinal relatif du bloc de filtration central 15C vers les faces d'évacuation 23 est empêché par la disposition relative des zones d'adhérence forte et des zones d'adhérence faible sur sa première face 24E. De même, le déplacement longitudinal relatif de ce bloc 15C vers les faces d'admission 21 est empêché par la répartition des zones d'adhérence forte et des zones d'adhérence faible ou nulle sur sa seconde face 24E.

En variante, une partie d'une zone d'adhérence forte d'une face d'un bloc peut être disposée en regard d'une partie d'une zone d'adhérence forte d'un bloc en regard. De même, une partie d'une zone d'adhérence faible ou nulle d'une face d'un bloc peut être disposée en regard d'une partie d'une zone d'adhérence faible ou nulle d'un bloc en regard.

Grâce à l'invention qui vient d'être décrite, il est possible de disposer d'une structure de filtration qui peut endurer une multitude de phases de régénération tout en préservant sa cohésion mécanique et son étanchéité par rapport aux suies.

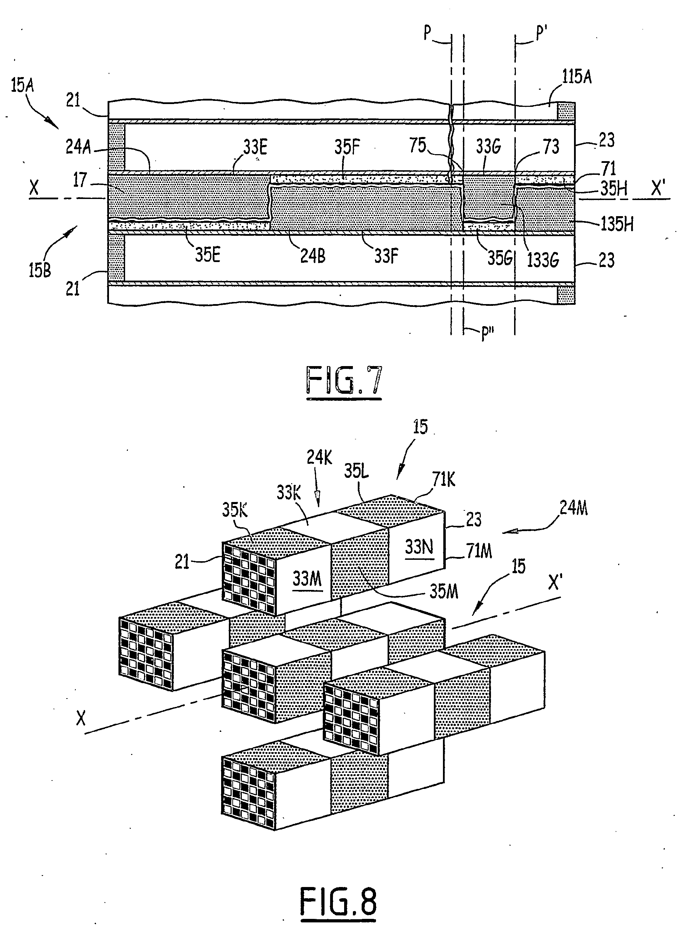

Dans la variante représentée sur la Figure 7, la première face 24A comprend successivement, de l'amont vers l'aval, parallèlement à la direction longitudinale X-X', une quatrième zone 33E d'adhérence forte avec le joint 17, une cinquième zone 35F d'adhérence faible ou nulle avec le joint 17, une sixième zone 33G d'adhérence forte avec le joint 17 et une septième zone 35H d'adhérence faible ou nulle avec le joint 17. Chaque zone 33 d'adhérence forte avec le joint 17 de la première face 24A est disposée en regard d'une zone 35 d'adhérence faible ou nulle avec le joint 17 de la deuxième face 24B. Par ailleurs, chaque zone 35 d'adhérence faible ou nulle avec le joint 17 de la première face 24A est disposée en regard d'une zone 33 d'adhérence forte avec le joint 17 de la deuxième face 24B.

Comme illustré sur la Figure 7, la septième zone 35H d'adhérence faible ou nulle avec le joint 17 est délimitée en aval par l'arête 71 commune entre la première face 24A et la face de sortie 23 du premier bloc de filtration 15A.

Par ailleurs, la longueur de chacune des sixième zone 33G et septième zone 35H, prise suivant la direction longitudinale X-X' est inférieure au cinquième de la longueur du premier bloc de filtration 15A, prise suivant la direction longitudinale X-X', et à la moitié de la longueur de chacune des troisième et quatrième zones 33E et 35F, prise également suivant la direction longitudinale X-X'.

En cas de fissuration dans le joint 17 et au sein du premier bloc 15A, cette disposition permet de retenir toute partie aval 115A du premier bloc de filtration 15A, délimitée par un plan P de fissuration transversal, situé entre la face d'entrée 21 et un plan P' transversal passant par le bord aval 73 de la sixième zone 33G.

Cette rétention est assurée par la coopération entre une butée 135H, formée solidaire du deuxième bloc 15B dans le joint 17, en regard de la septième zone 35H, et une butée 133G, formée solidaire de la partie aval 115A dans le joint 17, en regard de la sixième zone 33G.

Par ailleurs, dans le cas (non représenté) où le premier bloc 15A reste intact et où la fissuration apparaît dans le deuxième bloc 15B, toute partie aval du deuxième bloc de filtration 15B, délimitée par un plan de fissuration transversal situé entre la face d'entrée 21 et un plan P" passant par le bord aval 75 de la cinquième zone 35F, est retenue.

Dans la variante illustrée sur la Figure 8, chaque bloc 15 possède au moins une première face 24K qui présente successivement, de l'amont vers l'aval, une première zone 35K d'adhérence faible ou nulle avec le joint 17, une zone 33K d'adhérence forte avec le joint 17 et une deuxième zone 35L d'adhérence faible ou nulle avec le joint 17, délimitée en aval par l'arête 71 K commune entre la première face 24K et la face de sortie 23.

Par ailleurs chaque bloc 15 présente en outre une face latérale 24M, adjacente à la première face 24K, qui présente successivement, de l'amont vers l'aval, une première zone 33M d'adhérence forte avec le joint 17, une zone 35M d'adhérence faible ou nulle avec le joint 17 et une deuxième zone 33N d'adhérence forte avec le joint 17, adjacente à l'arête de sortie 71M, commune à la face latérale 24M et à la face de sortie 23.

Dans cette structure en « damier », chaque zone 33 d'adhérence forte avec le joint 17 de la première face 24K est adjacente à une zone 35 d'adhérence faible ou nulle avec le joint 17 de la face adjacente 24M.

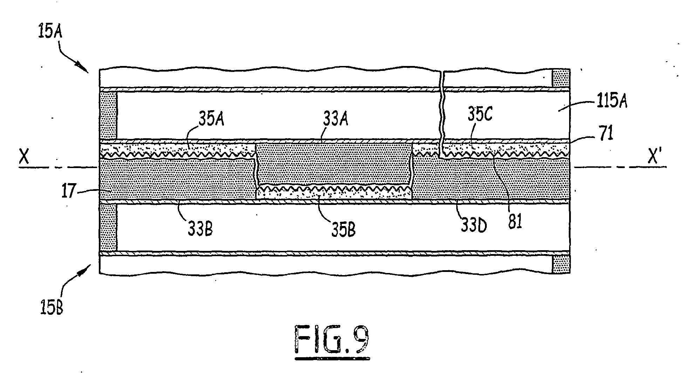

Dans la variante illustrée sur la Figure 9, les zones 35 d'adhérence faible ou nulle de chaque bloc présentent en outre, du côté du joint 17, des irrégularités de surface 81, comme par exemple des rainures ou/et des bossages, comme décrit dans la demande française n° 03 08588 de la Demanderesse.

De préférence, ces irrégularités de surface 81 s'étendent parallèlement à une direction inclinée ou transversale par rapport à la direction longitudinale X-X' du bloc 15.

Ces irrégularités 81 provoquent une augmentation de la rugosité des zones 35 d'adhérence faible ou nulle. Ainsi, la rugosité accrue dans la zone 35C d'adhérence faible ou nulle avec le joint 17, adjacente à l'arête commune 71 du premier bloc 15A, permet de retenir une partie aval 115A du premier bloc de filtration qui pourrait se détacher en cas de fissuration suivant un plan transversal au sein du premier bloc 15A.

## Revendications

1. Structure de filtration, notamment filtre à particules pour les gaz d'échappement d'un moteur à combustion interne, du type comprenant :
- au moins des premier et second organes de filtration (15A, 15B) munis respectivement d'une première et d'une seconde face (24A, 24B) disposées en regard l'une de l'autre ; et
- un joint (17) de liaison desdites faces, s'étendant entre lesdites faces (24A, 24B) ;
**caractérisée en ce que** la première face (24A) comprend au moins une première zone (33A) d'adhérence forte avec ledit joint (17) et au moins une zone (35A) d'adhérence faible ou nulle avec ce joint (17), lesdites zones (33A, 35A) comportant respectivement une première région d'adhérence forte avec ledit joint (17) et une région d'adhérence faible ou nulle avec ce joint (17), lesdites régions étant disposées respectivement en regard d'une première région (35B) d'adhérence faible ou nulle de la seconde face (24B) avec ledit joint (17), et d'une région (33B) d'adhérence forte de la seconde face (24B) avec ledit joint (17).

2. Structure selon la revendication 1, **caractérisée en ce que** la première face (24A) comprend en outre une seconde zone (33C) d'adhérence forte avec ledit joint (17) comportant une seconde région d'adhérence forte avec ledit joint (17) disposée en regard d'une seconde région (35C) d'adhérence faible ou nulle de la seconde face (24B) avec ledit joint (17).

3. Structure selon la revendication 2, **caractérisée en ce que**, dans au moins une section de la structure de filtration, la région (35A) d'adhérence faible ou nulle avec ledit joint (17) de la première face (24A) est disposée entre les première et seconde régions (33A, 35C) d'adhérence forte avec ledit joint (17) de cette première face (24A).

4. Structure selon la revendication 3, **caractérisée en ce que** ladite section est une section longitudinale.

5. Structure selon la revendication 3, **caractérisée en ce que** ladite section est une section transversale.

6. Structure selon l'une des revendication 1 à 5, **caractérisée en ce qu'**au moins un organe de filtration (15) est une brique prismatique dont chacune des faces latérales (24) est en regard d'une face latérale (24) d'un organe de filtration (15) associé, un joint de liaison (17) desdites faces s'étendant entre lesdites faces (24) ; et **en ce que** chacune des faces latérales (24) de la brique comprend au moins une zone (33) d'adhérence forte de cette face de la brique avec ledit joint (17) et au moins une zone (35) d'adhérence faible ou nulle de cette face (24) avec ledit joint (17), lesdites zones comportant respectivement une région (33) d'adhérence forte de cette face de la brique avec ledit joint (17) et une région (35) d'adhérence faible ou nulle de cette face (24) avec ledit joint (17), les dites régions étant disposées respectivement en regard d'une région (35) d'adhérence faible ou nulle avec ledit joint (17) de la face (24) en regard de l'organe de filtration (15) associé et d'une région (33) d'adhérence forte avec ledit joint (17) de la face (24) en regard de l'organe de filtration (15) associé.

7. Structure selon la revendication 6, **caractérisée en ce que** la région (33D) d'adhérence forte avec ledit joint (17) de la première face (24D) de la brique (15C) est disposée à l'opposé d'une région (35E) d'adhérence faible ou nulle avec ledit joint (17) d'une seconde face (24E) de la même brique (15C).

8. Structure selon l'une des revendications 1 à 7, **caractérisée en ce que** chacune des zones (35) d'adhérence faible ou nulle avec ledit joint est couverte d'un revêtement antiadhésif, au moins avant la mise en service de la structure.

9. Structure selon l'une quelconque des revendications précédentes, **caractérisée en ce que** les premier et second organes de filtration (15A, 15B) comprennent chacun une face d'admission (21) et une face d'évacuation (23) reliées respectivement par lesdites première et seconde faces (24A, 24B), au moins une région aval (35H ; 35L) d'adhérence faible ou nulle avec ledit joint (17) de la première face (24A) s'étendant jusqu'à l'arête commune (71 ; 71K) entre la face d'évacuation (23) et ladite première face (24A).

10. Structure selon la revendication 9, **caractérisée en ce que** ladite région aval (35H) présente une longueur, prise parallèlement à une direction longitudinale (X-X') du premier organe de filtration (15A), inférieure au cinquième de la longueur dudit premier organe de filtration (15A), prise suivant ladite direction longitudinale (X-X').

11. Structure selon la revendication 10, **caractérisée en ce que** ladite région aval (35H) présente une longueur, prise parallèlement à une direction longitudinale (X-X') du premier organe de filtration (15A), inférieure à la moitié d'au moins une autre région (33E, 33F) de la même face.

12. Structure selon l'une quelconque des revendications 9 à 11, **caractérisée en ce que** le premier organe de filtration (15A) comprend en outre une face latérale (24M) adjacente à la première face (24K), la face latérale (24M) présentant une région latérale (33N) d'adhérence forte avec ledit joint (17) s'étendant jusqu'à l'arête de sortie (71M) commune auxdites face latérale (24K) et face d'évacuation (23).

13. Structure selon l'une quelconque des revendications 9 à 12, **caractérisée en ce qu'**au moins la région aval (35L) d'adhérence faible ou nulle avec le joint (17) présente, du côté du joint (17), des irrégularités de surface (81), notamment des bossages ou/et des rainures.

## Claims

1. Filtration structure, in particular a particle filter for the exhaust gases from an internal combustion engine, of the type comprising:
- at least first and second filtration elements (15A, 15B) respectively provided with first and second faces (24A, 24B) arranged opposite one another; and
- a joint (17) for connecting the said faces, extending between the said faces (24A, 24B);
**characterized in that** the first face (24A) comprises at least a first zone (33A) of strong adhesion with the said joint (17) and at least one zone (35A) of weak or zero adhesion with this joint (17), the said zones (33A, 35A) respectively comprising a first region of strong adhesion with the said joint (17) and a region of weak or zero adhesion with this joint (17), the said regions being respectively arranged opposite a first region (35B) of the second face (24B) having weak or zero adhesion with the said joint (17), and a region (33B) of the second face (24B) having strong adhesion with the said oint (17).

2. Structure according to Claim 1, **characterized in that** the first face (24A) additionally comprises a second zone (33C) of strong adhesion with the said joint (17) comprising a second region of strong adhesion with the said joint (17) arranged opposite a second region (35C) of the second face (24B) having weak or zero adhesion with the said joint (17).

3. Structure according to Claim 2, **characterized in that**, in at least one section of the filtration structure, the region (35A) of the first face (24A) having weak or zero adhesion with the said joint (17) is arranged between the first and second regions (33A, 35C) of this first face (24A) having strong adhesion with the said joint (17).

4. Structure according to Claim 3, **characterized in that** the said section is a longitudinal section.

5. Structure according to Claim 3, **characterized in that** the said section is a transverse section.

6. Structure according to one of Claims 1 to 5, **characterized in that** at least one filtration element (15) is a prismatic brick each of whose lateral faces (24) is opposite a lateral face (24) of an associated filtration element (15), a joint (17) for connecting the said faces extending between the said faces (24); and **in that** each of the lateral faces (24) of the brick comprises at least one zone (33) of this face of the brick having strong adhesion with the said joint (17) and at least one zone (35) of this face (24) having weak or zero adhesion with the said joint (17), the said zones respectively comprising a region (33) of this face of the brick having strong adhesion with the said joint (17) and a region (35) of this face (24) having weak or zero adhesion with the said joint (17), the said regions being respectively arranged opposite a region (35) of the opposite face (24) of the associated filtration element (15) having weak or zero adhesion with the said joint (17), and a region (33) of the opposite face (24) of the associated filtration element (15) having strong adhesion with the said joint (17).

7. Structure according to Claim 6, **characterized in that** the region (33D) of the first face (24D) of the brick (15C) having strong adhesion with the said joint (17) is arranged on the opposite side from a region (35E) of a second face (24E) of the same brick (15C) having weak or zero adhesion with the said joint (17).

8. Structure according to one of Claims 1 to 7, **characterized in that** each of the zones (35) of weak or zero adhesion with the said joint is covered by an antiadhesive coating, at least prior to the structure being put into operation.

9. Structure according to any one of the preceding claims, **characterized in that** the first and second filtration elements (15A, 15B) each comprise an intake face (21) and a discharge face (23) respectively connected by the said first and second faces (24A, 24B), at least one downstream region (35H; 35L) of the first face (24A) that has weak or zero adhesion with the said joint (17) extending as far as the common edge (71; 71K) between the discharge face (23) and the said first face (24A).

10. Structure according to Claim 9, **characterized in that** the said downstream region (35H) has a length, taken parallel to a longitudinal direction (X-X') of the first filtration element (15A), which is less than a fifth of the length of the said first filtration element (15A), taken along the said longitudinal direction (X-X').

11. Structure according to Claim 10, **characterized in that** the said downstream region (35H) has a length, taken parallel to a longitudinal direction (X-X') of the first filtration element (15A), which is less than half of at least one other region (33E, 33F) of the same face.

12. Structure according to any one of Claims 9 to 11, **characterized in that** the first filtration element (15A) additionally comprises a lateral face (24M) adjacent to the first face (24K), the lateral face (24M) having a lateral region (33N) of strong adhesion with the said joint (17) extending as far as the outlet edge (71M) common to the said lateral face (24K) and discharge face (23).

13. Structure according to any one of Claims 9 to 12, **characterized in that** at least the downstream region (35L) of weak or zero adhesion with the joint (17) is provided, on the side towards the joint (17), with surface irregularities (81), in particular bosses and/or grooves.

## Patentansprüche

1. Filter-Struktur, insbesondere zum Filtern von Partikeln aus Abgasen eines Verbrennungsmotors, des Typs, welcher aufweist:
- mindestens erste und zweite Mittel (15A, 15B) zum Filtern, welche jeweils mit einer ersten und einer zweiten Fläche (24A, 24B) versehen sind, welche einander gegenüber angeordnet sind, und
- eine Stelle (17) zum Verbinden jener Flächen, welche sich zwischen den Flächen (24A, 24B) erstreckt,
**dadurch gekennzeichnet, dass** die erste Fläche (24A) mindestens eine erste Zone (33A) von starker Adhäsion mit der Stelle (17) und mindestens eine Zone (35A) von schwacher oder keiner Adhäsion mit der Stelle (17) aufweist, wobei die Zonen (33A, 35A) jeweils mindestens einen ersten Bereich von starker Adhäsion mit der Stelle (17) und einen Bereich von schwacher oder keiner Adhäsion mit der Stelle (17) aufweisen, wobei die Bereiche jeweils gegenüber einem ersten Bereich (35B) von schwacher oder keiner Adhäsion an der zweiten Fläche (24B) mit der Stelle (17) und an einem Bereich (33B) mit starker Adhäsion an der zweiten Fläche (24B) mit der Stelle (17) angeordnet sind.

2. Struktur gemäß Anspruch 1, **dadurch gekennzeichnet, dass** die erste Fläche (24A) unter anderem eine zweite Zone (33C) von starker Adhäsion mit der Stelle (17) aufweist, welche einen zweiten Bereich von starker Adhäsion mit der Stelle (17) aufweist, welche gegenüber einem zweiten Bereich (35C) von schwacher oder keiner Adhäsion an der zweiten Fläche (24B) mit der Stelle (17) angeordnet ist.

3. Struktur gemäß Anspruch 2, **dadurch gekennzeichnet, dass** in mindestens einem Abschnitt der Filterstruktur der Bereich (35A) von schwacher oder keiner Adhäsion mit der Stelle (17) der ersten Fläche (24A) zwischen dem ersten und dem zweiten Bereich (33A, 35C) von starker Adhäsion mit der Stelle (17) an der ersten Fläche (24A) angeordnet ist.

4. Struktur gemäß Anspruch 3, **dadurch gekennzeichnet, dass** der Abschnitt ein Längs-Abschnitt ist.

5. Struktur gemäß Anspruch 3, **dadurch gekennzeichnet, dass** der Abschnitt ein Quer-Abschnitt ist.

6. Struktur gemäß einem der Ansprüche 1 bis 5, **dadurch gekennzeichnet, dass** mindestens ein Filtermittel (15) ein prismatischer Ziegel ist, von dem jede seiner seitliche Seiten (24) gegenüber einer seitlichen Fläche (24) eines zugehörigen Filtermittels (15) ist, wobei eine Verbindungsstelle (17) von den Flächen sich zwischen den Flächen (24) erstreckt, und dass jede der seitlichen Seiten (24) des Ziegels mindestens eine Zone (33) von starker Adhäsion an der Fläche des Ziegels mit der Stelle (17) und mindestens eine Zone (35) von schwacher oder keiner Adhäsion an der Fläche (24) mit der Stelle (17) aufweist, wobei die Zonen jeweils einen Bereich (33) von starker Adhäsion an der Fläche des Ziegels mit der Stelle (17) und einem Bereich (35) von schwacher oder keiner Adhäsion an der Fläche (24) mit der Stelle (17) aufweisen, wobei jene Bereiche, welche jeweils gegenüber einem Bereich (35) von schwacher oder keiner Adhäsion mit der Stelle (17) an der Fläche (24) gegenüber dem zugehörigen Filter-Mittel (15) und einem Bereich (33) von starker Adhäsion mit der Stelle (17) an der Fläche (24) gegenüber dem zum zugehörigen Filtermittel (15) angeordnet sind.

7. Struktur gemäß Anspruche 6, **dadurch gekennzeichnet, dass** der Bereich (33D) von starker Adhäsion mit der Stelle (17) an der ersten Fläche (24D) des Ziegels (15C) an einem gegenüberliegenden Bereich (35E) von schwacher oder keiner Adhäsion mit der Stelle (17) an einer zweiten Fläche (24E) desselben Ziegels (15C) angeordnet ist.

8. Struktur gemäß Ansprüche 1 bis 7, **dadurch gekennzeichnet, dass** jede der Zonen (35) von schwacher oder keiner Adhäsion mit der Stelle mit einer antiadhäsiven Beschichtung wenigstens vor der Inbetriebnahme der Struktur bedeckt wird.

9. Struktur gemäß einem der vorhergehenden Ansprüche, **dadurch gekennzeichnet, dass** die ersten und die zweiten Filtermittel (15A, 15B) jeweils eine Einlass-Fläche (21) und eine Auslass-Fläche (23) aufweisen, welche jeweils mit der ersten und der zweiten Fläche (24A, 24B) verbunden sind, wobei sich mindestens ein niederdruckseitiger Bereich (35H; 35L) von schwacher oder keiner Adhäsion mit der Stelle (17) der ersten Fläche (24A) bis zu der gemeinsamen Ebene (71; 71K) zwischen der Auslass-Fläche (23) und der ersten Fläche (24A) erstreckt.

10. Struktur gemäß Anspruch 9, **dadurch gekennzeichnet, dass** der niederdruckseitige Bereich (35H) eine Länge, welche parallel zu einer Längs-Richtung (X-X') des ersten Filtermittels (15A) verläuft, kleiner als ein Fünftel der Länge des ersten Filtermittels (15A) aufweist, welche entlang der Längsrichtung (X-X') verläuft.

11. Struktur gemäß Anspruch 10, **dadurch gekennzeichnet, dass** der niederdruckseitige Bereich (35H) eine Länge, welche parallel zur Längsrichtung (X-X') des ersten Filtermittels (15A) verläuft, kleiner als die Hälfte eines anderen Bereichs (33E, 33F) derselben Fläche aufweist.

12. Struktur gemäß einem der Ansprüche 9 bis 11, **dadurch gekennzeichnet, dass** das erste Filtermittel (15A) unter anderem eine seitliche Seite (24M) aufweist, welche zu der erste Fläche (24K) benachbart ist, wobei die seitliche Seite (24M) einen seitlichen Bereich (33N) von starker Adhäsion mit der Stelle (17) aufweist, welche sich bis zur Ebene des gemeinsamen Ausgangs (71M) von der seitlichen Fläche (24K) und von der Auslass-Fläche (23) erstreckt.

13. Struktur gemäß einem der Ansprüche 9 bis 12, **dadurch gekennzeichnet, dass** der niederdruckseitige Bereich (35L) von schwacher oder keiner Adhäsion mit der Stelle (17) auf der Seite der Stelle (17) Oberflächen-Unregelmäßigkeiten aufweist, insbesondere Buckel oder/und Rillen.
